# EUROPEAN PATENT APPLICATION

(11) **EP 2 988 461 A1**
(43) Date of publication of application: **24.02.2016**
(21) Application number: 14187047.7
(22) Date of filing: 30.09.2014
(51) Int. Cl.: H04L 27/00, G06K 7/10, H04B 5/00

(54) **Unified Communications Receiver and Associated Method**

(30) Priority: 22.08.2014 US 201414466094
(71) Applicant: MediaTek, Inc, Hsin-Chu 300 (TW)
(72) Inventor: Liao, Yi-Ching, 330 Taoyuan-City, Taoyuan County (TW); Huang, Ching-Ting, 24448 New Taipei City (TW); Peng, Bao-Chi, 106 Taipei City (TW)
(74) Representative: Goddar, Heinz J.

(57) **Abstract**

A unified communications receiver and associated method is provided. The unified communications receiver includes: a protocol detection apparatus, configured to determine a near-field communication (NFC) protocol type of an incoming baseband signal according to a first portion of the incoming baseband signal; and a demodulation device, compliant with a plurality of NFC protocols, configured to demodulate the incoming RF signal according to the determined NFC protocol type.

## Description

### BACKGROUND OF THE INVENTION

### Field of the Invention

The invention relates to a communications device, and, in particular, to a unified communications receiver supporting multiple near-field communication (NFC) protocols and associated method.

### Description of the Related Art

With advances in technology, near-field communication (NFC) devices have become increasingly popular. NFC technology is commonly used for contactless short-range communications based on radio frequency identification (RFID) standards, using magnetic field induction to enable communication between electronic devices, including mobile wireless communications devices. This short-range, high-frequency wireless communications technology exchanges data between devices over a short distance. However, there are different NFC protocols being developed, such as ISO-14443-A (NFC-A), ISO-14443-B (NFC-B), ISO-15693, and ISO-18092 (NFC-F/Felica). Due to the lack of a unified standard in the NFC industry, a compliant product has to support multiple NFC standards.

### BRIEF SUMMARY OF THE INVENTION

A detailed description is given in the following embodiments with reference to the accompanying drawings.

A unified communications receiver is provided. The unified communications receiver includes: a protocol detection apparatus, configured to determine a near-field communication (NFC) protocol type of an incoming baseband signal according to a first portion of the baseband signal; and a demodulation device, compliant with a plurality of NFC protocols, configured to demodulate the incoming baseband signal according to the determined NFC protocol type.

A method for detecting multiple near-field communication (NFC) protocols for use in a unified communications receiver is provided. The method includes the steps of: detecting an NFC protocol type of an incoming baseband signal according to a first portion of the baseband signal; and demodulating the incoming baseband signal according to the determined NFC protocol type.

### BRIEF DESCRIPTION OF THE DRAWINGS

The invention can be more fully understood by reading the subsequent detailed description and examples with references made to the accompanying drawings, wherein:
FIG. 1 is a block diagram of a unified communications receiver in accordance with an embodiment of the invention;
FIGs. 2A∼2C are diagrams illustrating detection of the incoming signal for different NFC protocols in accordance with an embodiment of the invention;
FIG. 3A is a detailed block diagram of the unified communications receiver in accordance with an embodiment of the invention;
FIG. 3B is a detailed block diagram of the unified communications receiver with a communications front-end portion in accordance with an embodiment of the invention;
FIG. 3C is a detailed block diagram of the unified communications receiver with a communications front-end portion in accordance with an embodiment of the invention;
FIG. 3D is a detailed block diagram of the unified communications receiver with a communications front-end portion in accordance with an embodiment of the invention;
FIG. 4A is a block diagram of the unified synchronizer in accordance with an embodiment of the invention;
FIG. 4B is a block diagram of the unified synchronizer in accordance with another embodiment of the invention;
FIG. 5A is a block diagram of the unified communications receiver in accordance with an embodiment of the invention;
FIG. 5B is a block diagram of the unified communications receiver in accordance with another embodiment of the invention;
FIG. 6A is a block diagram of the unified communications receiver in accordance with an embodiment of the invention;
FIG. 6B is a block diagram of the unified communications receiver in accordance with another embodiment of the invention;
FIG. 7 is a flow chart of a method for detecting multiple near-field communication (NFC) protocols in accordance with an embodiment of the invention;
FIG. 8 is a block diagram of the unified communications receiver in accordance with another embodiment of the invention; and
FIG. 9 is a block diagram of the unified communications synchronizer in accordance with another embodiment of the invention.

### DETAILED DESCRIPTION OF THE INVENTION

The following description is made for better understanding of the invention and should not be taken in a limiting sense. The scope of the invention is best determined by reference to the appended claims.

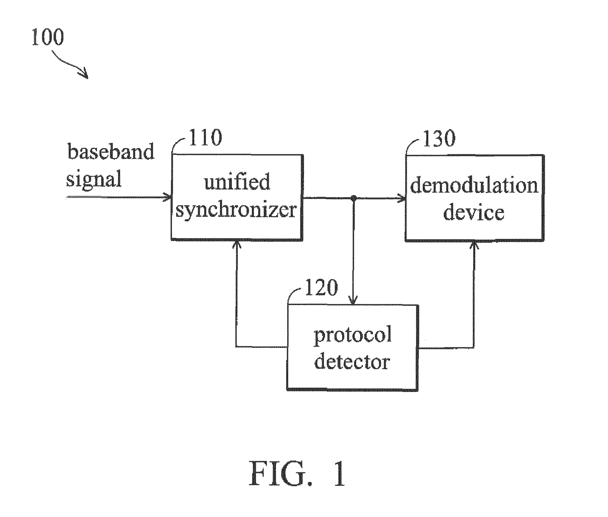

FIG. 1 is a block diagram of a unified communications receiver 100 in accordance with an embodiment of the invention. The unified communications receiver 100 comprises a unified synchronizer 110, a protocol detector 120, a demodulation device 130. In an embodiment, the unified synchronizer 110 is configured to perform synchronization of a common part of the NFC standards supported by the unified communications receiver 100, such as ISO-14443-A, ISO-14443-B, ISO-15693, ISO-18092-212k, and ISO-18092-424k ...etc. For example, the unified synchronizer 110 may firstly detect characteristics such as frame timing (e.g. start of frame, end of frame, etc.) of a baseband signal converted from an incoming radio frequency (RF) signal from a remote polling device using a synchronization algorithm compliant with the supported NFC standards, and transmit the detected characteristics (e.g. frame timing) to the protocol detector 120. In this embodiment, a frequency-domain approach can be utilized to detect the frequency characteristics of the baseband signal, and a peak-counting approach can be applied to perform threshold comparison and state-control in the aforementioned synchronization algorithm.

Furthermore, NFC protocol detection performed by the protocol detector 120 can be accelerated according to the first characteristics, e.g. frame timing, detected in the baseband signal. For example, the protocol detector 120 may perform the protocol detection by a differential part of the supported NFC protocols. After receiving the detected NFC protocol type of the baseband signal, the protocol detector 120 may transmit a detection signal indicating the detected NFC protocol type to the unified synchronizer 110 and the demodulation device 130. With the detection signal from the protocol detector 120, the unified synchronizer 110 may accomplish the complete synchronization procedure, e.g. subsequent synchronization procedure of frequencies and phases.

It should be noted that the demodulation device may comprise a plurality of demodulators, and each of the demodulators is responsible for demodulating the incoming baseband signal in a compatible NFC protocol based on the detected NFC protocol type and the detected characteristics of the baseband signal. In an embodiment, only one of the demodulators associated with the detected protocol type will be activated by the protocol detector 120, and the remaining demodulators will not be activated.

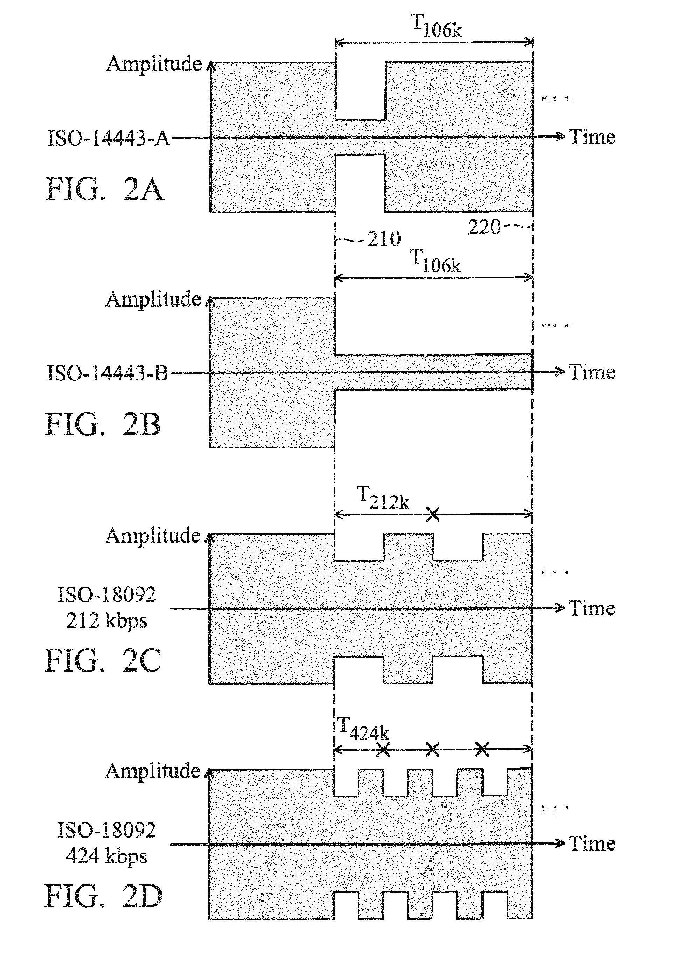

FIGs. 2A∼2D are diagrams illustrating detection of the incoming signal for different NFC protocols in accordance with an embodiment of the invention. In FIG. 2A, the period between dashed lines 210 and 220 is regarded as a 1-bit duration (i.e. T₁₀₆ₖ). The protocol detector 120 may detect the frequency characteristics, e.g. by counting the number of peaks of the incoming baseband signal between the 1-bit duration, thereby determining the protocol type of the incoming RF signal. For example, the signal patterns defined in NFC-A protocol are Pattern X, Pattern Y, and Pattern Z, and the signal pattern defined in NFC-F protocol (Felica) are Pattern E and Pattern D. The protocol detector 120 may detect the sequence of "Pattern Z+ Pattern Z", and determine the baseband signal as an ISO-14443-A protocol type having a data rate of 106kbps. Similarly, the period between dashed lines 210 and 220 is also regarded as a 1-bit duration (i.e. T₁₀₆ₖ) in FIG. 2B, and the protocol detector 120 may detect the sequence in the 1-bit duration and determine the incoming RF signal as an ISO-14443-B protocol type having a data rate of 106kbps.

In FIG. 2C, the period between dashed lines 210 and 220 is regarded as a 2-bit duration (i.e. 2*T₂₁₂ₖ), and the protocol detector 120 may detect the sequence of Logic "0"s and Logic "1"s with start of frame (SoF) of B24D or 4DB2 in the hexadecimal format in a predetermined bit duration (e.g. 2-bitduration in FIG. 2C), and determine the incoming RF signal as an ISO-18092 (NFC-F) protocol type having a data rate of 212kbps. Similarly, in FIG. 2D, the protocol detector 120 may detect the sequence of Logic "0"s and Logic "1"s with start of frame (SoF) of B24D or 4DB2 in the hexadecimal format in the predetermined bit duration (e.g. 4-bit duration (4*T₄₂₄) in FIG. 2D), and determine the incoming RF signal as an ISO-18092(NFC-F) protocol type having a data rate of 424kbps. The aforementioned signal patterns, such as Pattern X, Pattern Y, Pattern Z, Pattern D, and Pattern E, can be referred to in the specification of NFC standards, and the details will be omitted here. It should be noted that the aforementioned NFC standards are for description, and the invention is not limited to the aforementioned NFC standards. Furthermore, the bit durations shown in FIGs. 2A∼2D are for brief description. Persons skilled in the art will appreciate that the bit durations for protocol type detection may vary based on different NFC protocols.

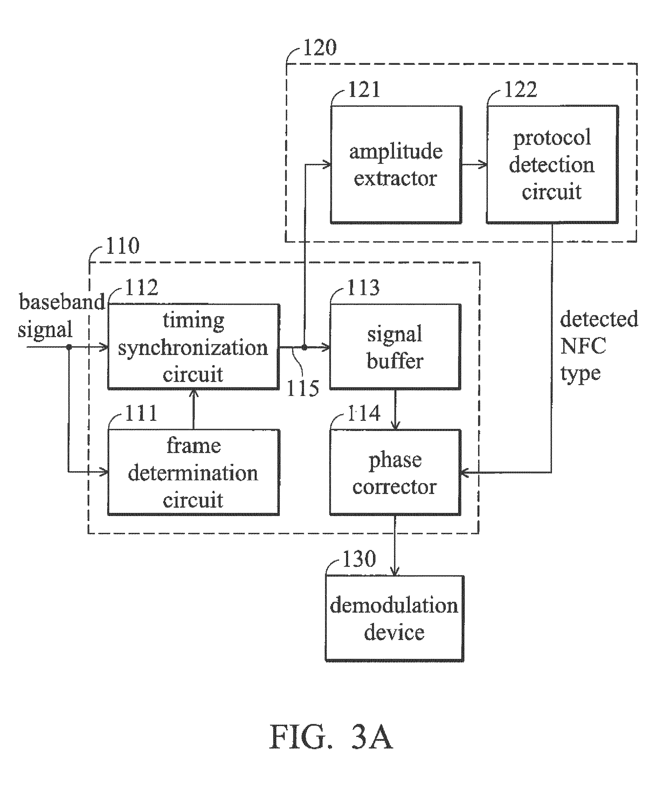

FIG. 3A is a detailed block diagram of the unified communications receiver 100 in accordance with an embodiment of the invention. The unified synchronizer 110 comprises a frame determination circuit 111, a timing synchronization circuit 112, a signal buffer 113, and a phase corrector 114. The frame determination circuit 111 may firstly detect the frame boundaries of each frame of the incoming baseband signal. The timing synchronization circuit 112 may perform timing synchronization on the incoming baseband signal based on the detected frame boundaries from the frame determination circuit 111, and then output the timing-synchronized baseband signal 115 to the protocol detector 120. In addition, the timing-synchronized baseband signal is also stored in the signal buffer 113 for the subsequent synchronization process.

As shown in FIG. 3A, the protocol detector 120 comprises an amplitude extractor 121 and a protocol detection circuit 122. A baseband signal comprises a real part and an imaginary part. Preferably, the real part is utilized for protocol detection of an incoming baseband signal. The amplitude extractor 121 may detect the amplitude of the timing-synchronized baseband signal 115, and then the protocol detection circuit 122 may detect the NFC protocol type of the converted baseband signal. Once the protocol type of the baseband signal is detected, the protocol detection circuit 122 may transmit the detected NFC protocol type to the phase corrector 114 of the unified synchronizer 110. Accordingly, the phase corrector 114 may retrieve the timing-synchronized baseband signal from the signal buffer 113, and correct the phase on the retrieved timing-synchronized baseband signal 115, thereby generating a phase-synchronized baseband signal. Afterwards, the protocol detector 120 may activate one of the demodulators in the demodulation device 130 based on the detected NFC protocol type, and the activated demodulator may perform demodulation on the phase-synchronized baseband signal from the unified synchronizer 110.

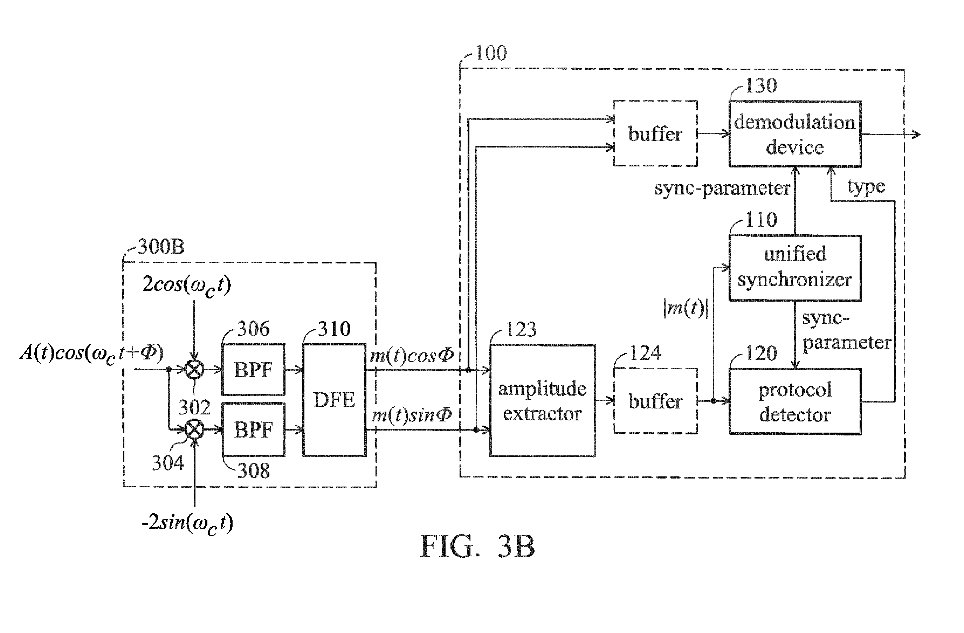

FIG. 3B is a detailed block diagram of the unified communications receiver 100 with a communications front-end portion in accordance with an embodiment of the invention. It should be noted that FIG. 3A only shows the unified communications receiver 100 without a front-end portion. In the invention, there are several ways to convert the incoming RF signal to a baseband signal via different front-end configurations. Referring to FIG. 3B, for example, the communications front-end portion 300B comprises multipliers 302 and 304, band-pass filters 306 and 308, and a digital front end (DFE) 310. The incoming RF signal can be denoted as *A(t)cos(w_{c}t*+*Φ).* The incoming RF signal is processed in two paths, and two baseband signals *m(t)cosΦ* and *m(t)sinΦ* are output by the DFE 310.

In the embodiment, the unified synchronizer 110 further comprises an amplitude extractor 123 which generates an amplitude signal of the incoming baseband signals by extracting the amplitude of the incoming baseband signals *m(t)cosΦ* and *m(t)sinΦ,* which can be further stored in a buffer 124. The input baseband signal for the unified synchronizer 110 and the protocol detector 120 can be retrieved from the buffer 124. The operations of other components in the unified communications receiver 100 can be referred to in the embodiment of FIG. 1, and thus the details will be omitted here.

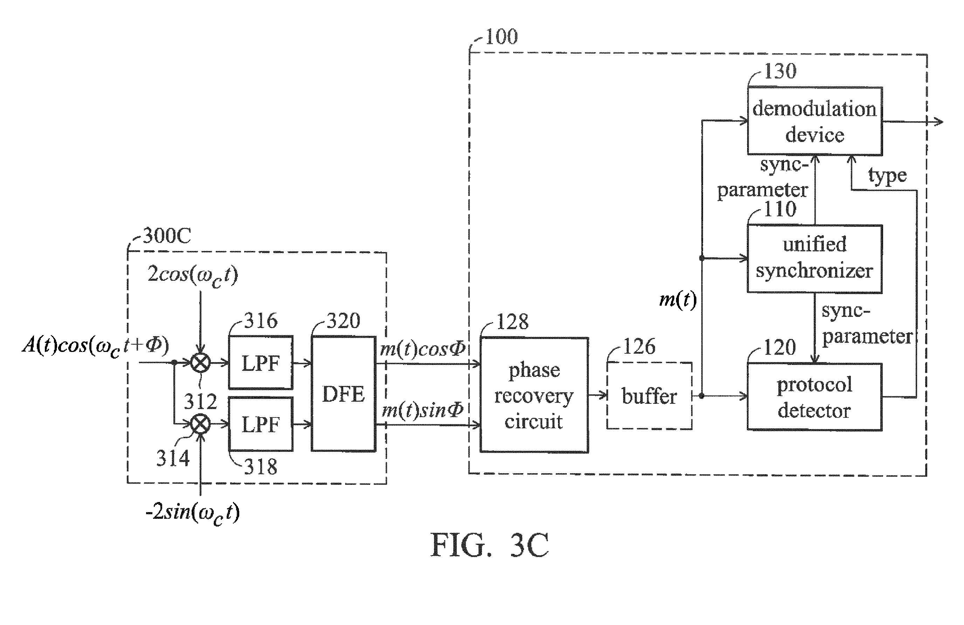

FIG. 3C is a detailed block diagram of the unified communications receiver 100 with a communications front-end portion in accordance with another embodiment of the invention. As shown in FIG. 3C, the quadrature interface (i.e. front-end portion 300C) can be implemented by an alternative way different from that in FIG. 3B. The communications front-end 300B may comprises multipliers 312 and 314, low-pass filters 316 and 318, and a digital front end 320. In the embodiment, the unified communications receiver 100 may further comprise a phase recovery circuit 128 configured to calibrate the phase of the baseband signals *m(t)cosΦ* and *m(t)sinΦ* from the DFE 320 to generate a phase-recovered signal. The phase-recovered signal is stored in the buffer 126. The input baseband signal for the unified synchronizer 110, the protocol detector 120, and the demodulation device 130 can be retrieved from the buffer 126.

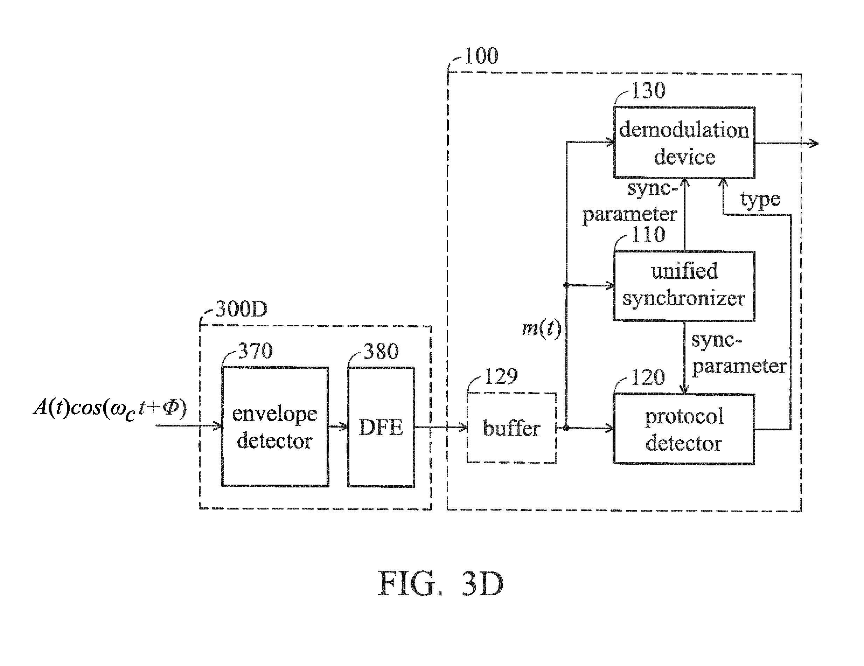

FIG. 3D is a detailed block diagram of the unified communications receiver 100 with a communications front-end portion in accordance with yet another embodiment of the invention. As shown in FIG. 3D, the front-end portion 300D comprises an envelope detector 370 and a DFE 380. The envelope detector 370 generates an envelope signal which is the envelope of the incoming RF signal *A(t)cos(w_{c}t*+*Φ).* The envelope signal is further processed by the DFE 380 to obtain a baseband signal which is further stored in the buffer 129. The input baseband signal for the unified synchronizer 110, the protocol detector 120, and the demodulation device 130 can be retrieved from the buffer 129.

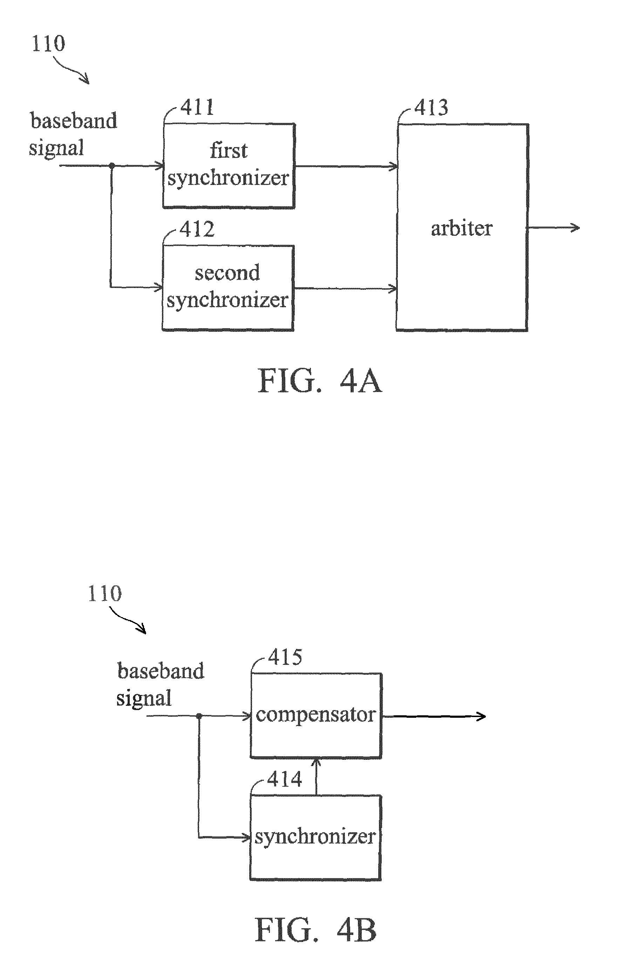

FIG. 4A is a block diagram of the unified synchronizer 110 in accordance with an embodiment of the invention. The unified synchronizer 110 comprises a first synchronizer 411 and a second synchronizer 412, wherein the first synchronizers 411 is designed for a specific NFC protocol, and the second synchronizer 412 is capable of performing synchronization of more than one NFC protocol. In addition, an arbiter 413 is deployed in the unified synchronizer 110 to determine whether the synchronization signal output is from the first synchronizer 411 or the second synchronizer 412.

FIG. 4B is a block diagram of the unified synchronizer 110 in accordance with another embodiment of the invention. The unified synchronizer 110 comprises a synchronizer 414 and a compensator 415, wherein the synchronizer 414 performs synchronization of all the supported NFC protocols of the unified communications receiver 100. The compensator 415 removes synchronization errors of the incoming baseband signal by using the parameters from the synchronizer 414. For example, the compensator 415 may receive the phase offset from the synchronizer 414 to perform phase compensation (e.g. phase rotation) of the incoming baseband signal.

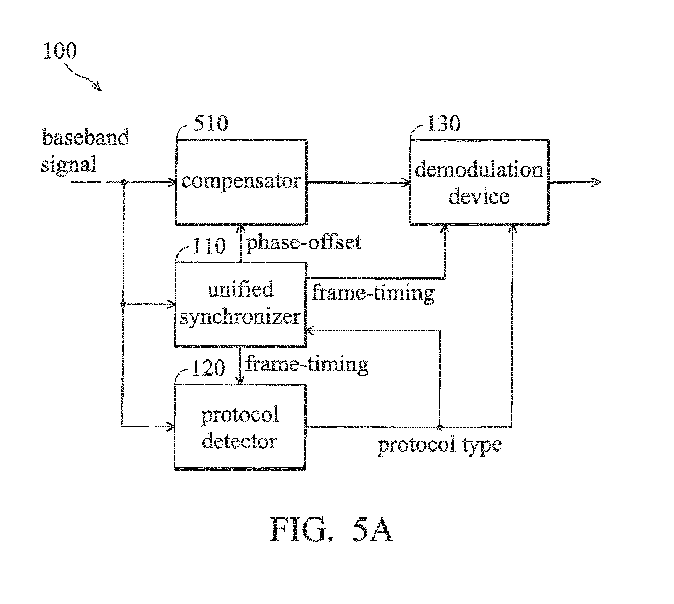

FIG. 5A is a block diagram of the unified communications receiver 100 in accordance with an embodiment of the invention. The compensator 510 performs signal compensation to the incoming baseband signal based on the phase offset from the unified synchronizer 110, and one of the demodulators in the demodulation device 130 associated with the detected NFC protocol type is activated to perform demodulation to the compensated baseband signal. The compensator 510 receives the phase-offset information from the unified synchronizer 110 to perform signal compensation to the incoming baseband signal. The unified synchronizer 110 detects the frame timing of the incoming baseband signal, and the protocol detection performed by the protocol detector 120 can be accelerated with the frame-timing information. Afterwards, the synchronization procedure can be completed by the unified synchronizer 110, and the compensator 510 receives the phase-offset information from the unified synchronizer 110. In other words, the signal compensation is performed after completing synchronization and protocol detection in the embodiment of FIG. 5A.

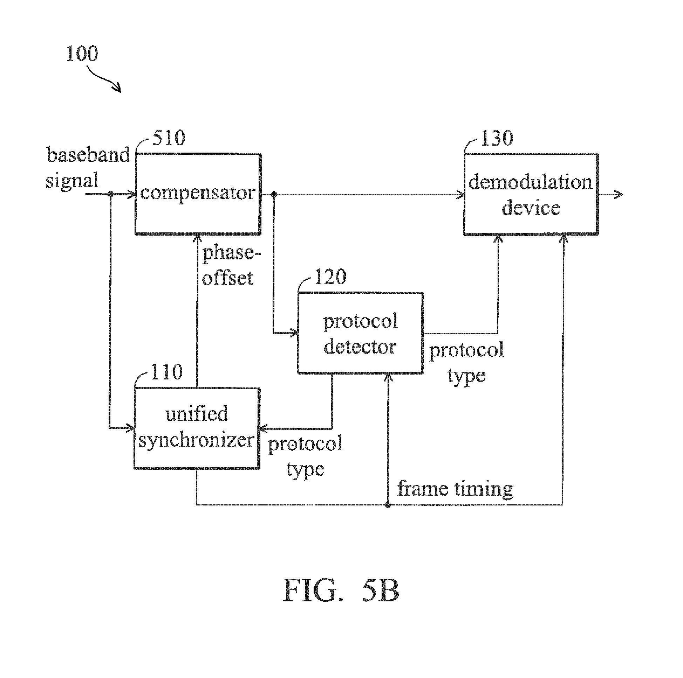

FIG. 5B is a block diagram of the unified communications receiver 100 in accordance with another embodiment of the invention. The protocol detector 120 receives the compensated baseband signal to perform protocol detection. The unified synchronizer 110 is capable of estimating the phase offset of the incoming baseband signal, and the compensator 510 may perform phase synchronization on the incoming baseband signal based on the phase offset from the unified synchronizer 110. Subsequently, the protocol detector 120 may perform protocol detection on the compensated baseband signal from the compensator 510. Alternatively, the protocol detector 120 is capable of performing protocol detection with the timing-synchronized baseband signal which is not phase-synchronized yet.

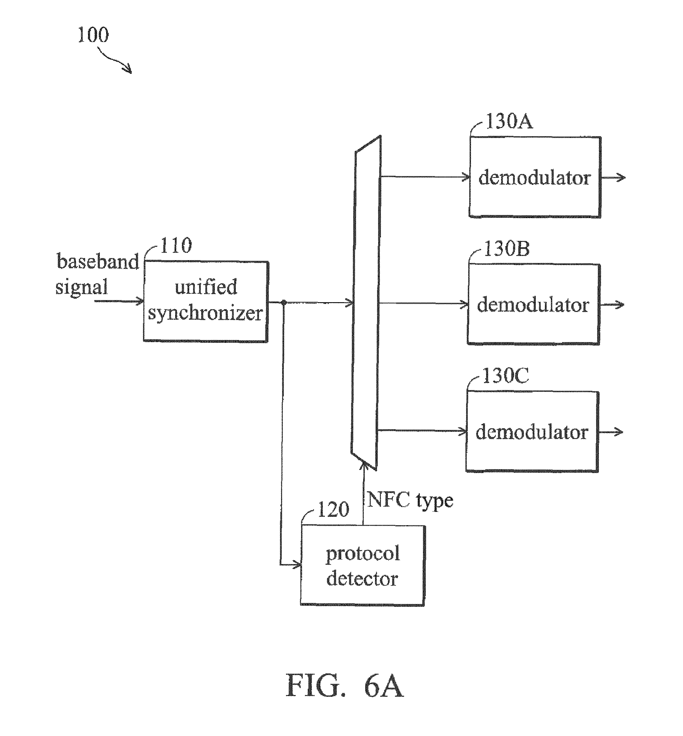

FIG. 6A is a block diagram of the unified communications receiver 110 in accordance with an embodiment of the invention. The demodulation device 130 comprises demodulators 130A, 130B and 130C. For example, the demodulators 130A, 130B and 130C may support the ISO-14443A (NFC-A), ISO-14443B (NFC-B), and ISO-18092 (including 212kbps and 424kbps) protocols, respectively. Specifically, one of the demodulators 130A, 130B, and 130C is activated upon the selection signal (i.e. the "NFC type" signal) of the multiplexer 160 is determined, and the incoming baseband signal or the compensated baseband signal from the unified synchronizer 110 is traversed to the activated demodulator through the multiplexer 160.

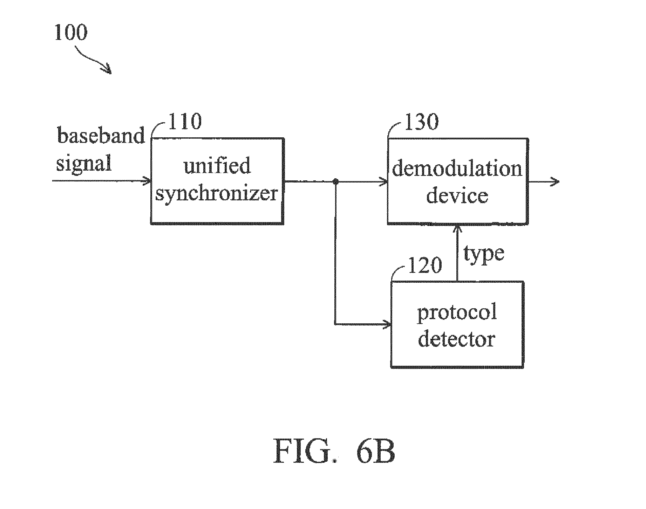

FIG. 6B is a block diagram of the unified communications receiver 110 in accordance with another embodiment of the invention. The demodulation device 130 can be implemented by software executed by a processor (e.g. a digital signal processor (DSP), a central processing unit (CPU), or equivalent circuits). Specifically, various demodulation programs for different NFC protocols are stored in a memory unit (not shown), and the processor may execute the associated demodulation program based on the detected protocol type from the protocol detector 120.

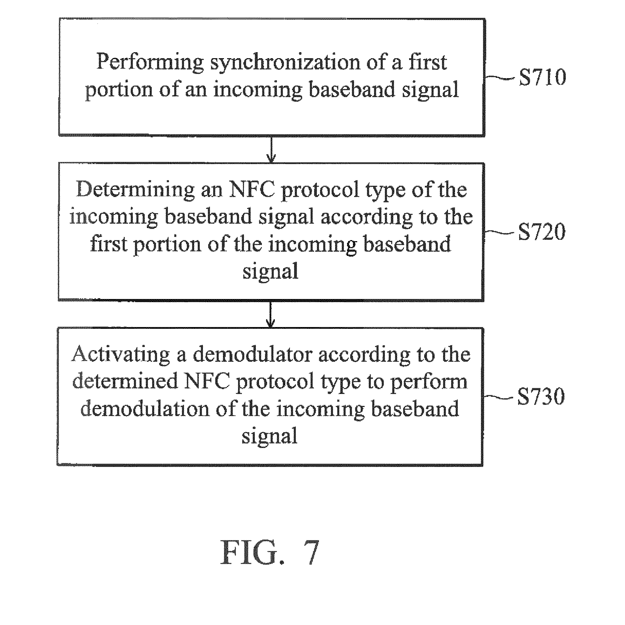

FIG. 7 is a flow chart of a method for detecting multiple near-field communication (NFC) protocols in accordance with an embodiment of the invention. In step S710, synchronization of a first portion of an incoming baseband signal is performed, e.g. by detecting frame timing. It should be noted that the synchronization of the first portion of the incoming baseband signal can be completed no matter which NFC protocol is compiled by the incoming baseband signal. In step S720, a near-field communication (NFC) protocol type of the incoming baseband signal is determined according to the first portion of the incoming baseband signal, i.e. based on the detected frame timing of the incoming baseband signal in step S710. In step S730, the incoming baseband signal is demodulated according to the determined NFC protocol type. For example, one of the demodulators is activated based on the determined NFC protocol type to perform demodulation of the incoming baseband signal.

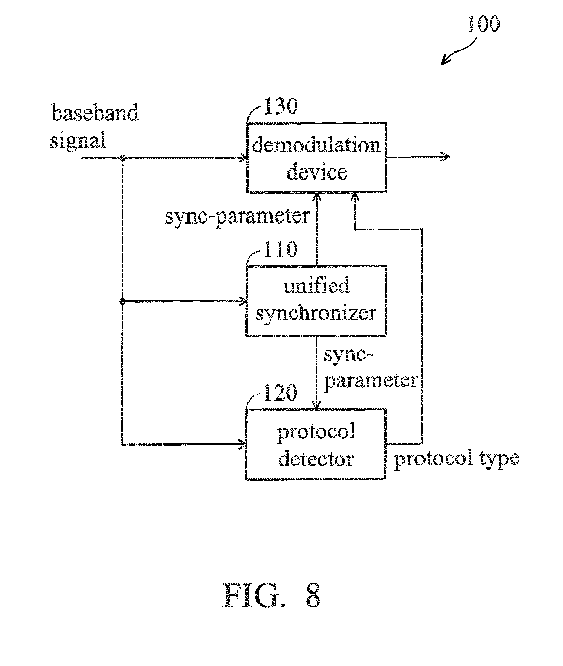

FIG. 8 is a block diagram of the unified communications receiver in accordance with another embodiment of the invention. The architecture of the unified communications receiver 100 in FIG. 8 similar to that in FIG. 5A without a compensator. In this embodiment, a portion of the synchronization and demodulation of the incoming baseband signal may be dependent. For example, the unified synchronizer 110 detects the frame timing of the incoming baseband signal, and the protocol detection performed by the protocol detector 120 can be accelerated with the frame-timing information. Afterwards, the synchronization procedure can be completed by the unified synchronizer 110, and the demodulation device 130 receives the frame-timing information from the unified synchronizer 110. In other words, the demodulation is performed by one demodulator of the demodulation device 130 after completing the synchronization and the protocol detection.

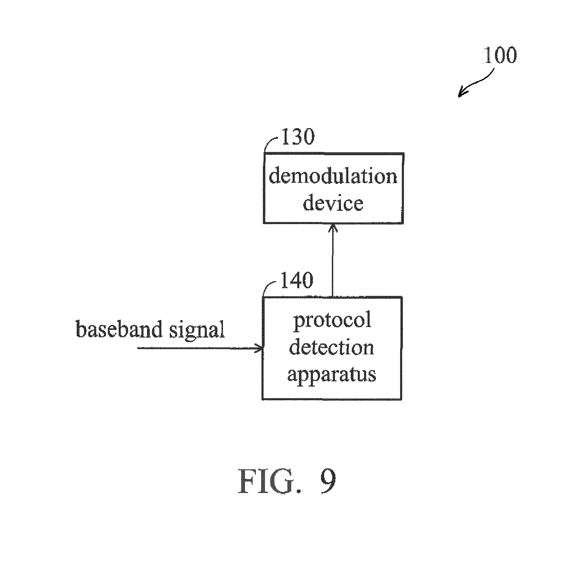

FIG. 9 is a block diagram of the unified communications synchronizer in accordance with another embodiment of the invention. Referring to FIG. 1 and FIG. 9, the protocol detection apparatus 140 may comprises the unified synchronizer 110 and the protocol detector 120 shown in FIG. 1 or FIG. 8. For example, the protocol detection apparatus 140 is configured to determine a near-field communication (NFC) protocol type of an incoming baseband signal according to a first portion of the incoming baseband signal. The demodulation device 130 is capable of being compliant with a plurality of NFC protocols, and is configured to demodulate the incoming baseband signal according to the determined NFC protocol type.

In view of the above, a unified communications receiver and a method for detecting multiple NFC protocols are provided in the invention. The time required for NFC decoding is reduced. In addition, the hardware cost (e.g. die size) is also decreased because a protocol detection apparatus compliant with various NFC standards is disclosed in the invention rather than implementing different independent demodulators compliant with different NFC standards. Furthermore, the power consumption can also be decreased because one demodulator associated with the detected NFC protocol type is enabled to perform demodulation of the incoming baseband signal.

While the invention has been described by way of example and in terms of the preferred embodiments, it is to be understood that the invention is not limited to the disclosed embodiments. On the contrary, it is intended to cover various modifications and similar arrangements without departing from the spirit of this invention. Therefore, the scope of the appended claims should be accorded the broadest interpretation so as to encompass all such modifications and similar arrangements.

## Claims

1. A unified communications receiver, comprising:
a protocol detection apparatus, configured to determine a near-field communication (NFC) protocol type of an incoming baseband signal according to a first portion of the incoming baseband signal; and
a demodulation device, compliant with a plurality of NFC protocols, configured to demodulate the incoming baseband signal according to the determined NFC protocol type.

2. The unified communications receiver as claimed in claim 1, wherein the protocol detection apparatus comprises:
a unified synchronizer, configured to perform synchronization of the first portion of the incoming baseband signal; and
a protocol detector, configured to determine the NFC protocol type of the incoming baseband signal according to the first portion of the incoming baseband signal.

3. The unified communications receiver as claimed in claim 1, wherein the protocol detection apparatus comprises:
a unified synchronizer, configured to perform synchronization of the first portion of the incoming baseband signal; and
a protocol detector, coupled to the unified synchronizer and configured to receive the incoming baseband signal and determine the NFC protocol type of the incoming baseband signal.

4. The unified communications receiver as claimed in claim 1, wherein the protocol detection apparatus comprises:
an amplitude extractor, configured to generate an amplitude signal of the incoming baseband signal;
a unified synchronizer, configured to perform synchronization on the amplitude signal; and
a protocol detector, coupled to the unified synchronizer and configured to determine the NFC protocol type of the incoming baseband signal according to the amplitude signal.

5. The unified communications receiver as claimed in claim 1, wherein the protocol detection apparatus comprises:
a phase recovery circuit, configured to generate a phase-recovered signal of the baseband signal;
a unified synchronizer, configured to perform synchronization on the phase-recovered signal; and
a protocol detector, coupled to the unified synchronizer, configured to determine the NFC protocol type of the incoming baseband signal according to the phase-recovered signal.

6. The unified communications receiver as claimed in one of claims 2 to 5, wherein the unified synchronizer further accomplishes synchronization of the remaining portion of the incoming baseband signal based on the determined NFC protocol type from the protocol detector, and transmits the synchronized baseband signal to the activated demodulator.

7. The unified communications receiver as claimed in claim 6, wherein frequency and phase synchronization is performed according to the determined NFC protocol type from the protocol detector by the synchronization of the remaining portion of the incoming baseband signal.

8. The unified communications receiver as claimed in one of the preceding claims, wherein the demodulation device comprises:
a plurality of demodulators, wherein each of the demodulators is compliant with a specific NFC protocol among the NFC protocols, and one of the demodulators is activated according to the NFC protocol type to perform demodulation of the incoming baseband signal.

9. The unified communications receiver as claimed in one of the preceding claims, wherein the ISO-14443-A, ISO-14443-B, ISO-18092-212k, and ISO-18092-424k protocols are supported by the unified communications receiver.

10. The unified communications receiver as claimed in one of the preceding claims, wherein the demodulation device is implemented by a digital signal processor.

11. A method for detecting multiple near-field communication (NFC) protocols for use in a unified communications receiver, the method comprising:
determining an NFC protocol type of an incoming baseband signal according to a first portion of the incoming baseband signal; and
demodulating the incoming baseband signal according to the determined NFC protocol type.

12. The method as claimed in claim 11, further comprising:
performing synchronization of the first portion of the incoming baseband signal;
determining the NFC protocol type of the incoming baseband signal according to the first portion of the incoming baseband signal; and
activating a demodulator according to the determined NFC protocol type to perform demodulation of the incoming baseband signal.

13. The method as claimed in claim 12, further comprising:
accomplishing synchronization of the remaining portion of the incoming baseband signal according to the NFC protocol type; and
transmitting the synchronized baseband signal to the activated demodulator.

14. The method as claimed in one of claims 11 to 13, wherein frame timing of the incoming baseband signal is detected by the synchronization of the first portion of the incoming baseband signal.

15. The method as claimed in one of claims 11 to 14, wherein the ISO-14443-A, ISO-14443-B, ISO-18092-212k, and ISO-18092-424k protocols are supported by the unified communications receiver.
